# EUROPÄISCHE PATENTSCHRIFT

(11) **EP 2 416 999 B1**
(45) Veröffentlichungstag und Bekanntmachung des Hinweises auf die Patenterteilung: **04.11.2015**
(21) Anmeldenummer: 10710547.0
(22) Anmeldetag: 17.03.2010
(51) Int. Cl.: B62B 3/02, B62B 3/16, A47B 31/06

(54) **PLATZSPAREND AUFBEWAHRBARER TRANSPORTWAGEN ZUR BESTÜCKUNG EINER FLUGZEUGBORDKÜCHE**
TRANSPORT CART THAT CAN BE STORED IN A SPACE-SAVING MANNER FOR EQUIPPING AN AIRCRAFT GALLEY
CHARIOT DE TRANSPORT PEU ENCOMBRANT POUR ÉQUIPER UNE CUISINE DE BORD D'UN AÉRONEF

(30) Priorität: 02.04.2009 DE 202009004554 U; 02.04.2009 US 211713
(43) Veröffentlichungstag der Anmeldung: 15.02.2012
(73) Patentinhaber: Airbus Operations GmbH, 21129 Hamburg (DE)
(72) Erfinder: SUESS, Wolfgang, 15517 Fürstenwalde (DE)
(74) Vertreter: Schicker, Silvia
(86) Internationale Anmeldenummer: PCT/EP2010/001689
(87) Internationale Veröffentlichungsnummer: WO 2010/112142

(56) Entgegenhaltungen:
- WO-A1-2007/028958
- JP-U- 50 030 408
- JP-U- 56 033 760
- US-A- 2 862 720
- US-A- 5 484 046
- US-A- 5 683 220

## Beschreibung

Die vorliegende Erfindung betrifft einen platzsparend aufbewahrbaren Transportwagen zur Bestückung einer Flugzeugbordküche, beispielsweise mit zur Versorgung der Passagiere an Bord des Flugzeugs benötigten Serviceprodukten.

Gegenwärtig ist üblich, einen Teil der zur Versorgung der Passagiere an Bord eines Verkehrsflugzeugs benötigten Serviceprodukte, wie z.B. Nahrungsmittel oder Getränke in Trolleys zu laden. Die Beladung der Trolleys wird von einem für die Lieferung der Serviceprodukte verantwortlichen Cateringunternehmen vorgenommen. Die gefüllten Trolleys werden an Bord des Flugzeugs gebracht und in entsprechenden Trolleyaufnahmebereichen in den Bordküchen des Flugzeugs untergebracht. Im Flugbetrieb des Flugzeugs wird ein Teil der in den Trolleyaufnahmebereichen in den Bordküchen untergebrachten Trolleys für Serviceaufgaben, d.h. die Verteilung von Speisen und Getränken an die Passagiere in der Passagierkabine verwendet. Die übrigen Trolleys verbleiben dagegen während des gesamten Fluges in den Trolleyaufnahmebereichen in den Bordküchen. Aufgrund ihrer Ausstattung mit einem stabilen, stoßfesten Gehäuse, Rädern, Bremsen etc. weisen Trolleys ein verhältnismäßig großes Volumen sowie ein verhältnismäßig hohes Gewicht auf. Insbesondere die nicht für Serviceaufgaben herangezogenen Trolleys führen daher zu einem erhöhtem Raumbedarf sowie Mehrgewicht in den Bordküchen des Flugzeugs.

Nicht in Trolleys zu verladende Serviceprodukte werden von dem für die Lieferung der Serviceprodukte verantwortlichen Cateringunternehmen mittels eines Transportwagens an Bord des Flugzeugs gebracht und dort manuell in in den Bordküchen vorgesehenen Schränken verstaut. Nach seiner Entladung wird der Transportwagen wieder von Bord des Flugzeugs gebracht. Die manuelle Bestückung der Bordküchenschränke ist verhältnismäßig zeitaufwendig. Ferner erfordert insbesondere die Bestückung von Bordküchenoberschränken, d.h. Schränken, die in einem oberen Abschnitt der Bordküchen angeordnet sind, einen verhältnismäßig großen Krafteinsatz.

Aus der WO 2007/096000 A1 ist eine modular aufgebaute Flugzeugbordküche bekannt, die einen Grundkörper mit einer Mehrzahl von Fächern umfasst. In den Fächern sind verschieden große Boxen aufgenommen, in denen zur Versorgung der Passagiere an Bord des Flugzeugs benötigte Serviceprodukte, wie z.B. Nahrungsmittel oder Getränke untergebracht werden können. Ferner sind in den Fächern des Grundkörpers verschiedene Geräte, wie z.B. ein Ofen oder ein Mikrowellengerät angeordnet.

Die nicht vorveröffentlichte DE 10 2008 063 248 beschreibt einen Transportwagen, der zur Bestückung einer aus der WO 2007/096000 A1 bekannten modular aufgebauten Flugzeugbordküche mit Boxen geeignet ist, die beispielsweise zur Versorgung der Passagiere an Bord des Flugzeugs benötigte Serviceprodukte enthalten. Der Transportwagen umfasst ein beispielsweise plattenförmig ausgebildetes Basiselement, an dem eine Mehrzahl von Rädern sowie in einem Abstand voneinander angeordnete Rahmenelemente befestigt sind. Ferner umfasst der Transportwagen eine erste Führungseinrichtung, die dazu eingerichtet ist, mit einer komplementären zweiten Führungseinrichtung in Eingriff zu gelangen, die an einer in der zu bestückenden Flugzeugbordküche aufnehmbaren und zum Transport in dem Transportwagen vorgesehenen Box ausgebildet ist. Die erste Führungseinrichtung ist dazu eingerichtet, die Box gegen eine Verlagerung auf dem Transportwagen in einer Richtung senkrecht zu einer Längsachse des Transportwagens zu sichern, wenn sie sich mit der an der Box ausgebildeten, komplementären zweiten Führungseinrichtung in Eingriff befindet. Schließlich ist der Transportwagen mit einem Verriegelungsmechanismus versehen, der dazu eingerichtet ist, die Box gegen eine Verlagerung auf dem Transportwagen in eine Richtung parallel zu einer Längsachse des Transportwagens zu sichern. Der in der DE 10 2008 063 248 beschriebene Transportwagen hat den Nachteil, dass er relativ großvolumig ist und daher, wenn er nicht in Gebrauch ist, ein großes Lagervolumen beansprucht.

Der Erfindung liegt die Aufgabe zugrunde, einen platzsparend aufbewahrbaren Transportwagen bereitzustellen, der eine einfache, sichere und komfortable Bestückung einer Flugzeugbordküche, beispielsweise mit zur Versorgung der Passagiere an Bord des Flugzeugs benötigten Serviceprodukten ermöglicht und der insbesondere zur Bestückung einer aus der WO 2007/096000 A1 bekannten modular aufgebauten Flugzeugbordküche geeignet ist.

Ein erfindungsgemäßer Transportwagen zur Bestückung einer Flugzeugbordküche umfasst ein beispielsweise im Wesentlichen plattenförmig ausgebildetes Basiselement, das eine Bodenfläche sowie eine der Bodenfläche gegenüberliegende Ladefläche aufweist. An der Bodenfläche des Basiselements ist eine Mehrzahl von Rädern befestigt. Ferner ist an dem Basiselement ein Handgriff angebracht. Der erfindungsgemäße Transportwagen umfasst ferner einen Sicherungsmechanismus, der dazu eingerichtet ist, eine in der zu bestückenden Flugzeugbordküche aufnehmbare Box beim ihrem Transport auf dem Transportwagen gegen Herabrutschen von dem Transportwagen zu sichern. Mit anderen Worten, der Sicherungsmechanismus dient dazu, zu verhindern, dass sich die Box in unerwünschter Weise, beispielsweise wenn der Transportwagen in Richtung einer Längsachse des Transportwagens bewegt wird, in Richtung der Längsachse des Transportwagens verlagert und von dem Transportwagen herunterfällt. Unter der Längsachse des Transportwagens wird hier eine Achse verstanden, die in der normalen Fahrtrichtung des Transportwagens ausgerichtet ist. Der Sicherungsmechanismus kann beispielsweise in Form eines Verriegelungsmechanismus ausgebildet sein. Da der erfindungsgemäße Transportwagen mit einem Sicherungsmechanismus versehen ist, kann darauf verzichtet werden, den Transportwagen mit einem geschlossenen Aufnahmebehälter oder dergleichen zu versehen. Dadurch kann der Transportwagen verhältnismäßig leichtgewichtig gestaltet werden.

Der Handgriff des erfindungsgemäßen Transportwagens ist so geformt und an einer derartigen Position an dem Basiselement angebracht, dass das Basiselement des Transportwagens im unbeladenen Zustand des Transportwagens auf ein Basiselement eines weiteren erfindungsgemäßen Transportwagens stapelbar ist. Mit anderen Worten, der Handgriff des erfindungsgemäßen Transportwagens ist so geformt und an einer derartigen Position an dem Basiselement angebracht, dass er das Abstellen des Basiselements des erfindungsgemäßen Transportwagens auf dem Basiselement des weiteren erfindungsgemäßen Transportwagens nicht behindert. Mit Hilfe des erfindungsgemäßen Transportwagens kann eine Flugzeugbordküche einfach, komfortabel und sicher mit Boxen bestückt werden, die beispielsweise zur Versorgung der Passagiere an Bord des Flugzeugs benötigte Serviceprodukte enthalten. Wenn der Transportwagen dagegen nicht in Gebrauch ist, kann er auf platzsparende Weise aufbewahrt werden, da mehrere erfindungsgemäße Transportwagen übereinander gestapelt werden können, indem das Basiselement eines Transportwagens auf das Basiselement eines weiteren Transportwagens gestellt wird.

Der Handgriff des erfindungsgemäßen Transportwagens umfasst vorzugsweise eine erste Strebe, die sich von einer ersten Seitenfläche des Basiselements erstreckt. Ferner kann der Handgriff eine zweite Strebe umfassen, die sich von einer der ersten Seitenfläche des Basiselements gegenüberliegenden zweiten Seitenfläche des Basiselements erstreckt. Die erste und/oder die zweite Seitenfläche des Basiselements kann/können im Wesentlichen senkrecht zur Ladefläche des Basiselements ausgerichtet sein. Grundsätzlich können die Seitenflächen des Basiselements lediglich durch die Seitenflächen eines plattenförmigen Basiselements gebildet werden. Falls gewünscht oder erforderlich, können die Seitenflächen des Basiselements jedoch auch wandförmig ausgeführt sein, d.h. sich in einer Richtung senkrecht zur Bodenfläche und/oder zur Ladefläche des Basiselements von der Bodenfläche und/oder der Ladefläche des Basiselements erstrecken. Eine derartige Anordnung kann beispielsweise die Befestigung des Handgriffs an dem Basiselement erleichtern und/oder eine auf dem Transportwagen angeordnete Box gegen eine Verlagerung in einer Richtung senkrecht zu der Längsachse des Transportwagens sichern.

Die erste und/oder die zweite Strebe des Handgriffs kann/können sich in einem Winkel von ca. 35° bis ca. 80° relativ zur Ladefläche des Basiselements von den Seitenflächen des Basiselements erstrecken. Besonders bevorzugt ist ein Winkelbereich von ca. 40° bis ca. 60° und insbesondere bevorzugt ein Winkelbereich von ca. 45° bis ca. 55°. Darüber hinaus ist/sind die erste und/oder die zweite Strebe bezogen auf die Längsachse des Transportwagens vorzugsweise in einem mittleren Bereich des Basiselements an dem Basiselement befestigt. Eine derartige Ausgestaltung und Anordnung der Handgriffstreben ermöglicht es, dass mehrere erfindungsgemäße Transportwägen problemlos übereinander gestapelt werden können.

Der Handgriff des erfindungsgemäßen Transportwagens kann ferner ein im Wesentlichen U-förmiges Verbindungselement umfassen. Das U-förmige Verbindungselement kann mit den freien Enden der sich von den Seitenflächen des Basiselements erstreckenden ersten und zweiten Streben verbunden sein, d.h. die freien Enden der ersten und zweiten Streben miteinander verbinden. Im Bereich des Verbindungselements kann der Handgriff des erfindungsgemäßen Transportwagens auf besonders komfortable Weise gegriffen werden, um den Transportwagen zu ziehen oder zu schieben.

Der Handgriff des erfindungsgemäßen Transportwagens kann mehrstückig ausgebildet sein. Insbesondere können die erste und die zweite Strebe sowie das Verbindungselement separat voneinander ausgebildet sein. Vorzugsweise ist der erfindungsgemäße Transportwagen jedoch mit einem einstückig ausgeführten Handgriff versehen. Der Handgriff kann abnehmbar an dem Basiselement angebracht sein. Falls gewünscht oder erforderlich, kann der Handgriff dann von dem Basiselement gelöst werden, beispielsweise um den Handgriff und die übrigen Komponenten des Transportwagens getrennt voneinander zu lagern. Ferner ermöglicht eine lösbare Befestigung des Handgriffs an dem Basiselement eine Ausstattung des erfindungsgemäßen Transportwagens mit unterschiedlichen Handgriffen. Der erfindungsgemäße Transportwagen kann dann besonders gut und besonders flexibel an spezifische Anwenderanforderungen angepasst werden.

Der erfindungsgemäße Transportwagen umfasst vorzugsweise ferner eine erste Führungseinrichtung, die dazu eingerichtet ist, mit einer komplementären zweiten Führungseinrichtung in Eingriff zu gelangen, die an der in der zu bestückenden Flugzeugbordküche aufnehmbaren und zum Transport auf dem Transportwagen vorgesehenen Box ausgebildet ist. Die erste Führungseinrichtung kann dazu eingerichtet sein, die Box gegen eine Verlagerung auf dem Transportwagen in einer Richtung senkrecht zu der Längsachse des Transportwagens zu sichern, wenn sie sich mit der an der Box ausgebildeten, komplementären zweiten Führungseinrichtung in Eingriff befindet. Im Zusammenwirken mit der an der Box ausgebildeten komplementären zweiten Führungseinrichtung sorgt die erste Führungseinrichtung somit dafür, dass eine auf dem Transportwagen transportierte Box, beispielsweise dann, wenn der Transportwagen über einen unebenen Untergrund fährt, nicht in unerwünschter Weise auf dem Transportwagen verlagert wird.

Die erste Führungseinrichtung kann beispielsweise eine Schiene umfassen, die dazu vorgesehen ist, mit einem zu der Form der Schiene komplementär ausgestalteten Bauteil der an der Box ausgebildeten zweiten Führungseinrichtung zusammenzuwirken. Alternativ dazu kann auch die an der Box ausgebildete zweite Führungseinrichtung eine Schiene umfassen, die dazu eingerichtet ist, mit einem komplementär zu der Form der Schiene ausgebildeten Bauteil der ersten Führungseinrichtung zusammenzuwirken. Eine besonders sichere Verbindung der ersten Führungseinrichtung mit der zweiten Führungseinrichtung kann dann gewährleistet werden, wenn die erste Führungseinrichtung und die an der Box ausgebildete komplementäre zweite Führungseinrichtung eine Nut und Federverbindung bilden. Beispielsweise kann die erste Führungseinrichtung einen Vorsprung umfassen, der so geformt ist, dass er dazu geeignet ist, in einer Nut der an der Box ausgebildeten zweiten Führungseinrichtung aufgenommen zu werden. Alternativ dazu kann auch die an der Box ausgebildete zweite Führungseinrichtung einen Vorsprung umfassen, der so geformt ist, dass er dazu geeignet ist, in einer Nut der ersten Führungseinrichtung des Transportwagens aufgenommen zu werden.

Die Ladefläche des Basiselements und/oder die erste Führungseinrichtung ist/sind vorzugsweise in einer Position an dem Transportwagen angeordnet, die an eine Position einer Anordnung zur Aufnahme einer zum Transport auf dem Transportwagen vorgesehenen Box in der Flugzeugbordküche derart angepasst ist, dass eine auf dem Transportwagen aufgenommene Box im Wesentlichen durch eine horizontale Verlagerung von dem Transportwagen in die Flugzeugbordküche geladen werden kann. Beispielsweise kann die Ladefläche des Basiselements in einer Höhe angeordnet sein, die der Höhe einer Bodenplatte eines in einem unteren Abschnitt der Flugzeugbordküche angeordneten Fachs der Flugzeugbordküche entspricht. Eine auf der Ladefläche des Basiselements aufgenommene Box kann dann auf komfortable Weise von dem Transportwagen in das Fach der Flugzeugbordküche geschoben werden, ohne dass es erforderlich ist, die Box anzuheben oder abzusenken.

In ähnlicher Weise kann die erste Führungseinrichtung des Transportwagens in einer Höhe angeordnet sein, die der Höhe einer Führungseinrichtung der Flugzeugbordküche entspricht, welche, ebenso wie die erste Führungseinrichtung des Transportwagens, mit einer an einer Box ausgebildeten zweiten Führungseinrichtung in Eingriff gebracht werden kann. Eine durch das Zusammenwirken der ersten Führungseinrichtung des Transportwagens mit der an der Box ausgebildeten zweiten Führungseinrichtung auf dem Transportwagens gehaltene Box kann dann bequem von dem Transportwagen in die Flugzeugbordküche geschoben werden, wobei die an der Box ausgebildeten zweiten Führungseinrichtung mit der Führungseinrichtung der Flugzeugbordküche in Eingriff gelangt.

Die Ladefläche des Basiselements kann eine erhöhte Stufe aufweisen, auf deren Oberfläche die erste Führungseinrichtung angeordnet sein kann. Durch die Ausgestaltung der Stufe kann die Höhe, in der die Box beim Transport auf dem erfindungsgemäßen Transportwagen angeordnet ist, wie gewünscht reguliert und beispielsweise an die Höhe einer Anordnung zur Aufnahme der Box in der Flugzeugbordküche angepasst werden.

Im Bereich der Ladefläche des Basiselements ist vorzugsweise eine Mehrzahl von Rollen angeordnet. Dadurch kann eine große und schwere Box oder ein anderer großer und schwerer Gegenstand auf besonders einfache und komfortable Art und Weise auf das Basiselement des Transportwagens geladen und wieder von dem Basiselement des Transportwagens entladen werden.

Die Rollen können beispielsweise drehbar an Seitenflächen der im Bereich der Ladefläche des Basiselements ausgebildeten Stufe befestigt sein. Die Rollen sind dann gut zugänglich und können, falls erforderlich, im Rahmen von Wartungsarbeiten rasch und einfach ausgetauscht werden.

Der erfindungsgemäße Transportwagen umfasst vorzugsweise ferner eine Blockiereinrichtung zur Blockierung der Räder des Transportwagens. Die Blockiereinrichtung kann eine Mehrzahl von Betätigungsanordnungen umfassen. Beispielsweise kann eine erste Betätigungsanordnung im Bereich des ersten Endes des Transportwagens angeordnet sein, während sich eine zweite Betätigungsanordnung im Bereich eines dem ersten Endes des Transportwagens gegenüberliegenden zweiten Endes befindet. Die Blockiereinrichtung ist dann besonders komfortabel von verschiedenen Seiten des Transportwagens aus zu betätigen.

Ferner kann der erfindungsgemäße Transportwagen eine Positioniereinrichtung umfassen, die dazu eingerichtet ist, mit einer an der zu bestückenden Flugzeugbordküche vorgesehenen komplementären Positioniereinrichtung zusammenzuwirken, um den Transportwagen relativ zu der zu bestückenden Flugzeugbordküche zu positionieren. Durch die Positioniereinrichtung kann gewährleistet werden, dass der Transportwagen im Betrieb in einer Position relativ zu der Flugzeugbordküche angeordnet wird, in der eine besonders einfache Be- und Entladung des Transportwagens bzw. eine besonders einfache Entnahme von Elementen aus der Flugzeugbordküche sowie eine besonders einfache Bestückung der Flugzeugbordküche möglich ist.

Die Positioniereinrichtung kann an dem Basiselement des Transportwagens befestigt sein. Ferner kann die Positioniereinrichtung mit einer Ausnehmung versehen sein, die dazu eingerichtet ist, einen Vorsprung der an der zu bestückenden Flugzeugbordküche vorgesehenen komplementären Positioniereinrichtung aufzunehmen, wenn der Transportwagen eine gewünschte Position relativ zu der zu bestückenden Flugzeugbordküche erreicht hat. Alternativ dazu kann auch die Positioniereinrichtung des Transportwagens einen Vorsprung aufweisen, der dazu vorgesehen ist, in einer Ausnehmung der an der zu bestückenden Flugzeugbordküche vorgesehenen komplementären Positioniereinrichtung aufgenommen zu werden.

Der Breite des Transportwagens und insbesondere die Breite des Basiselements, d.h. der Abstand der einander gegenüberliegenden Seitenflächen des Basiselements voneinander, ist vorzugsweise an die Ausgestaltung der zu bestückenden Flugzeugbordküche bzw. die Ausgestaltung der in der Flugzeugbordküche aufnehmbaren und zum Transport auf dem Transportwagen vorgesehenen Box angepasst. Insbesondere kann die Breite des Basiselements im Wesentlichen der Breite von in der Flugzeugbordküche vorgesehenen Fächern entsprechen. Vorzugsweise ist die Gesamtbreite des Transportwagens jedoch geringer als die Breite eines Gangs eines Flugzeugs, in dem die zu bestückende Flugzeugbordküche angeordnet ist. Der Transportwagen kann dann in komfortabler Weise durch den Gang des Flugzeugs gefahren werden.

Eine bevorzugte Ausführungsform eines erfindungsgemäßen Transportwagens zur Bestückung einer Flugzeugbordküche wird nun anhand der beigefügten schematischen Zeichnungen näher erläutert, von denen
- Figur 1: eine erste dreidimensionale Ansicht eines Transportwagens zur Bestückung einer Flugzeugbordküche im unbeladenen Zustand zeigt,
- Figur 2: eine zweite dreidimensionale Ansicht des Transportwagens gemäß Figur 1 zeigt,
- Figur 3: eine erste dreidimensionale Ansicht des Transportwagens gemäß Figur 1 im mit einer zur Bestückung einer Flugzeugbordküche vorgesehenen Box beladenen Zustand zeigt,
- Figur 4: eine zweite dreidimensionale Ansicht des Transportwagens gemäß Figur 3 zeigt und
- Figur 5: eine Detaildarstellung einer Positioniereinrichtung des Transportwagens zeigt, die mit einer an einer zu bestückenden Flugzeugbordküche vorgesehenen komplementären Positioniereinrichtung zusammenwirkt.

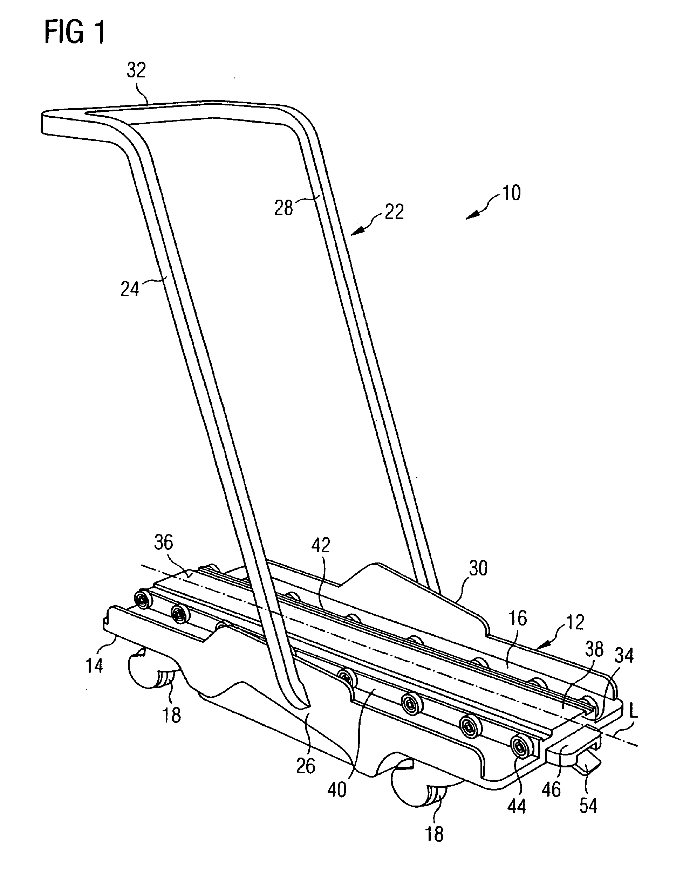

Ein in den Figuren 1 bis 5 veranschaulichter Transportwagen 10 umfasst ein Basiselement 12 mit einer im Wesentlichen rechteckigen Grundform, das eine Bodenfläche 14 sowie eine der Bodenfläche 14 gegenüberliegende Ladefläche 16 aufweist. An der Bodenfläche 14 des Basiselements 12 sind in einem Abstand von längsseitigen Rändern des Basiselements 12 vier Räder 18 befestigt.

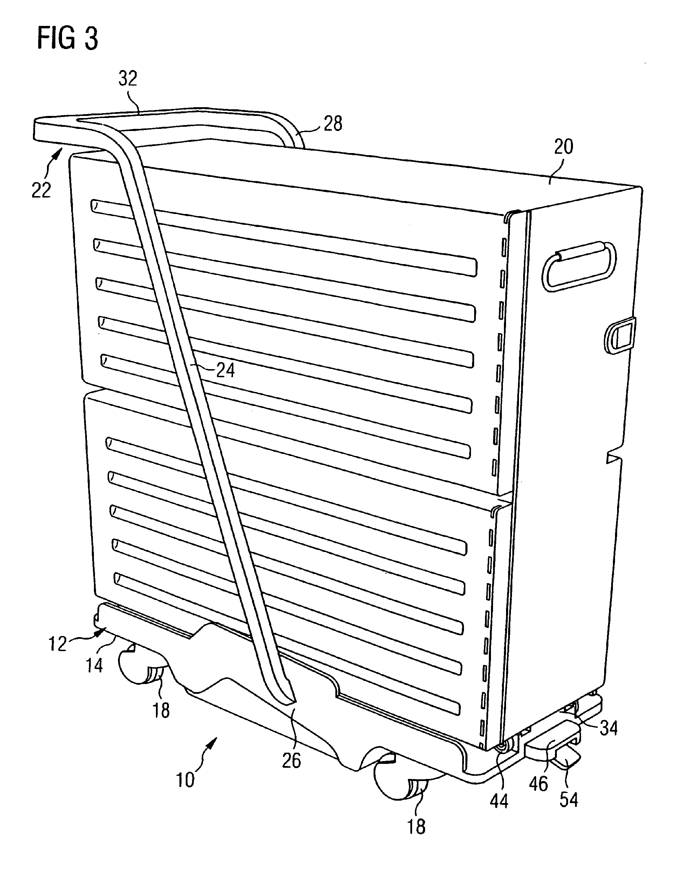

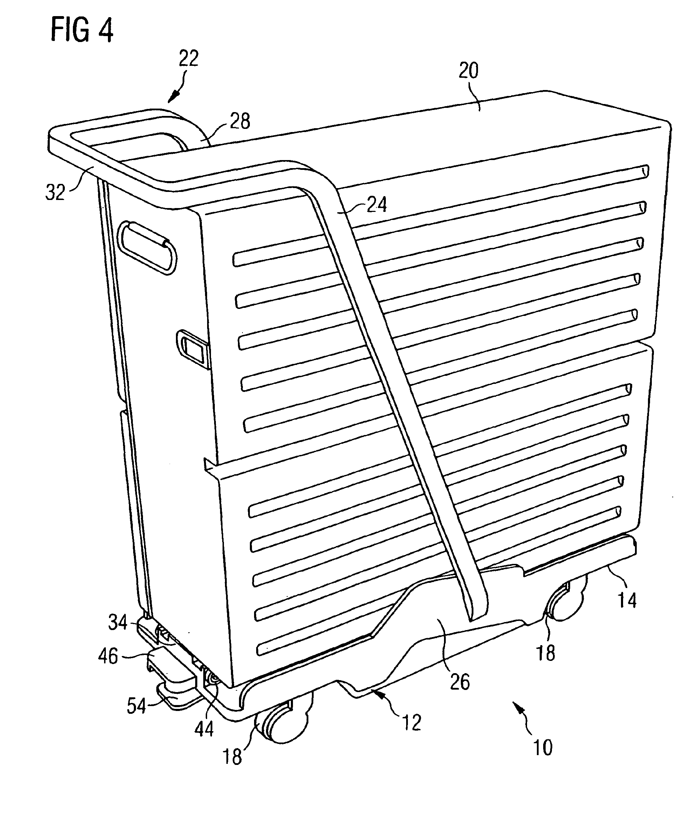

Wie insbesondere aus den Figuren 3 und 4 deutlich wird, kann auf der Ladefläche 16 des Basiselements 12 eine zur Bestückung einer Flugzeugbordküche vorgesehene Box 20, die beispielsweise zur Versorgung von Passagieren an Bord eines Flugzeugs benötigte Serviceprodukte enthalten kann, transportiert werden. Um die Box 20 beim Transport auf dem Transportwagen 10 gegen Herabrutschen von der Ladefläche 16 des Transportwagens 10 zu sichern, umfasst der Transportwagen 10 einen in den Figuren nicht näher veranschaulichten, in Form eines Verriegelungsmechanismus ausgebildeten Sicherungsmechanismus. Der Sicherungsmechanismus umfasst einen Verriegelungsstift, der in einer an der Box 20 ausgebildeten Ausnehmung aufnehmbar ist, wenn die Box 20 in einer gewünschten Position auf der Ladefläche 16 des Transportwagens 10 positioniert ist. Der Sicherungsmechanismus dient dazu, zu verhindern, dass sich die Box 20 in unerwünschter Weise, beispielsweise wenn der Transportwagen 10 in Richtung einer Längsachse L des Transportwagens 10 bewegt wird, in Richtung der Längsachse L des Transportwagens 10 auf der Ladefläche 16 verlagert und von dem Transportwagen 10 herunterfällt.

In einem bezogen auf die Längsachse L des Transportwagens 10 mittleren Bereich des Basiselements 12 ist an dem Basiselement 12 ein Handgriff 22 abnehmbar angebracht. Der Handgriff 22 ist einstückig ausgebildet und umfasst eine erste Strebe 24, die sich von einer ersten Seitenfläche 26 des Basiselements 12 erstreckt, sowie eine zweite Strebe 28, die sich von einer der ersten Seitenfläche 26 des Basiselements 12 gegenüberliegenden zweiten Seitenfläche 30 des Basiselements 12 erstreckt. Die erste und die zweite Strebe 24, 28 sind im Wesentlichen parallel zueinander und in einem Winkel von ca. 55° relativ zur Ladefläche 16 des Basiselements 12 ausgerichtet. Ein im Wesentlichen U-förmiges Verbindungselement 32 ist mit den freien Enden der sich von den Seitenflächen 26, 30 des Basiselements 12 erstreckenden ersten und zweiten Streben 24, 28 verbunden. An dem Verbindungselement 32 kann der Handgriff 22 von einem Benutzer bequem gegriffen und der Transportwagen 10 somit in komfortabler Art und Weise gezogen oder geschoben werden.

Der Handgriff 22 des Transportwagens 10 ist so geformt und an einer derartigen Position an dem Basiselement 12 angebracht, dass das Basiselement 12 des Transportwagens 10 im unbeladenen Zustand des Transportwagens 10 auf ein Basiselement 12 eines weiteren, beispielsweise identisch gestalteten Transportwagens 10 stapelbar ist. Mit anderen Worten, der Handgriff 22 des Transportwagens 10 ist so geformt und an einer derartigen Position an dem Basiselement 12 angebracht, dass er das Abstellen des Basiselements 12 des Transportwagens 10 auf dem Basiselement 12 des weiteren Transportwagens 10 nicht behindert. Ferner können die in einem Abstand von den längsseitigen Rändern des Basiselement 12 an der Bodenfläche 14 des Basiselements 12 befestigten Räder 18 gut auf der Ladefläche 16 des Basiselements 12 eines identischen Transportwagens 10 abgestellt werden. Der Transportwagen 10 kann somit, wenn er nicht in Gebrauch ist, auf platzsparende Weise aufbewahrt werden.

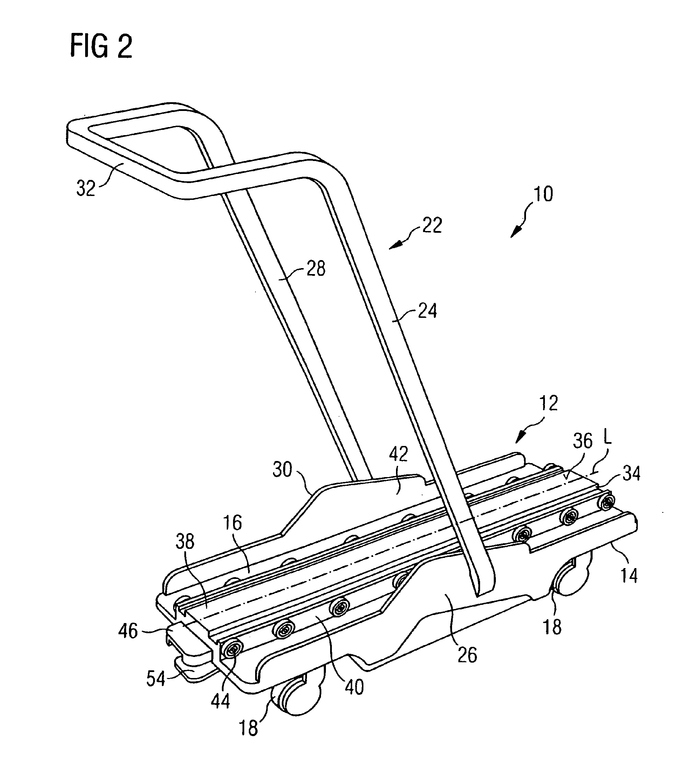

Wie am Besten in den Figuren 1 und 2 erkennbar ist, weist die Ladefläche 16 des Basiselements 12 eine erhöhte Stufe 34 auf. Auf einer Oberfläche 36 der Stufe 34 ist eine erste Führungseinrichtung 38 angeordnet. Die erste Führungseinrichtung 38 umfasst einen Vorsprung, der dazu eingerichtet ist, mit einer Nut einer zu der ersten Führungseinrichtung 38 komplementären zweiten Führungseinrichtung in Eingriff zu gelangen, die an der in der zu bestückenden Flugzeugbordküche aufnehmbaren und zum Transport in dem Transportwagen 10 vorgesehenen Box 20 ausgebildet ist. Die erste Führungseinrichtung 38 des Transportwagens 10 und die an der Box 20 ausgebildete komplementäre zweite Führungseinrichtung bilden somit eine Nut und Federverbindung. Im Zusammenwirken mit der an der Box 20 ausgebildeten komplementären zweiten Führungseinrichtung sorgt die erste Führungseinrichtung 38 dafür, dass die auf dem Transportwagen 10 transportierte Box 20, beispielsweise dann, wenn der Transportwagen 10 über einen unebenen Untergrund fährt, nicht in unerwünschter Weise in einer Richtung senkrecht zu der Längsachse L des Transportwagens 10 auf dem Transportwagen 10 verlagert wird.

Die Ladefläche 16 des Basiselements 12 bzw. die Oberfläche 36 der im Bereich der Ladefläche 16 ausgebildeten erhöhten Stufe 34 ist in einer Höhe angeordnet, die der Höhe einer Bodenplatte eines in einem unteren Abschnitt der mit der Box 20 zu bestückenden Flugzeugbordküche angeordneten Fachs der Flugzeugbordküche entspricht. Ferner ist an Seitenflächen 40, 42 der im Bereich der Ladefläche 16 des Basiselements 12 ausgebildeten Stufe 34 eine Mehrzahl von Rollen 44 befestigt. Mit Hilfe der Rollen 44 kann die Box 20 in einfacher Weise von dem Transportwagen 10 in das zur Aufnahme der Box 20 vorgesehene Fach der Flugzeugbordküche geschoben werden. In ähnlicher Weise erleichtern die Rollen 44 die Entnahme einer Box 20 aus dem Fach der Flugzeugbordküche, da die Box 20 in komfortabler Weise aus dem Fach auf die Ladefläche 16 des Basiselements 12 gezogen werden kann.

Die Gesamtbreite des Transportwagens 10 ist so gewählt, dass sie geringer ist als die Breite eines Gangs eines Flugzeugs, in dem die mit Hilfe des Transportwagens 10 zu bestückende Flugzeugbordküche angeordnet ist. Der Transportwagen 10 kann dadurch auf einfache und komfortable Weise durch den Gang des Flugzeugs zu der zu bestückenden Flugzeugbordküche geschoben werden. Das Basiselement 12 ist jedoch breit genug, um einen sicheren und komfortablen Transport der Box 20 zu ermöglichen.

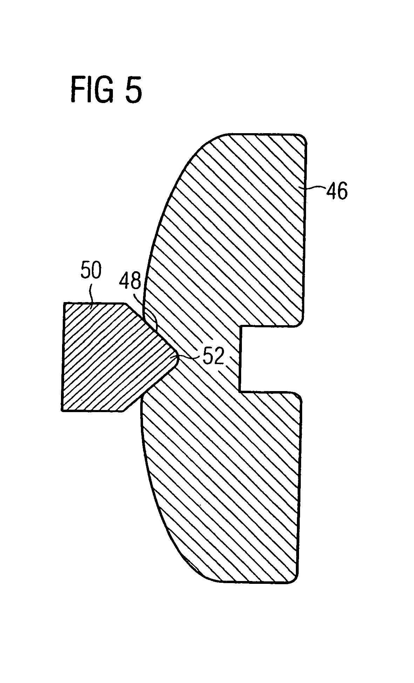

Um die Positionierung des Transportwagens 10 relativ zu der zu bestückenden Flugzeugbordküche zu erleichtern, ist an dem Transportwagen 10 eine in Figur 5 vergrößert dargestellte Positioniereinrichtung 46 vorgesehen. Die Positioniereinrichtung 46 ist an dem Basiselement 12 befestigt und mit einer Ausnehmung 48 versehen. Die Positioniereinrichtung 46 des Transportwagens 10 wirkt mit einer an der zu bestückenden Flugzeugbordküche vorgesehenen und in Figur 5 zur Veranschaulichung der Funktionsweise der Positioniereinrichtung 46 ebenfalls dargestellten komplementären Positioniereinrichtung 50 zusammen, wenn der Transportwagen 10 eine gewünschte Position relativ zu der bestückenden Flugzeugbordküche erreicht hat. Insbesondere wirkt ein an der Positioniereinrichtung 50 der Flugzeugbordküche vorgesehener Vorsprung 52 mit der Ausnehmung 48 der Positioniereinrichtung 46 des Transportwagens 10 zusammen.

Beispielsweise kann die Flugzeugbordküche in vertikaler Richtung in mehrere Abschnitte unterteilt sein, wobei jedem dieser Abschnitte eine Positioniereinrichtung 50 zum Zusammenwirken mit der Positioniereinrichtung 46 des Transportwagens 10 zugeordnet sein kann. Der Transportwagen 10 kann dann jeweils vor diesen Abschnitten positioniert werden, so dass komfortabel Boxen 20 von dem Transportwagen 10 in die Flugzeugbordküche geschoben werden können. In ähnlicher Weise können auf komfortable Weise Boxen 20 aus der Flugzeugbordküche auf der Ladefläche 16 des Basiselements 12 aufgenommen werden.

Eine besonders komfortable Bedienung des Transportwagens 10 wird dadurch ermöglicht, dass eine in den Figuren nicht näher veranschaulichte Blockiereinrichtung zur Blockierung der Räder 18 des Transportwagens 10 eine Mehrzahl von Betätigungseinrichtungen 54 umfasst. Die Betätigungseinrichtungen 54 sind im Bereich des ersten Endes sowie im Bereich des zweiten Endes des Transportwagens 10 angeordnet, so dass die Blockiereinrichtung zur Blockierung der Räder 18 von verschiedenen Seiten des Transportwagens 10 betätigt werden kann.

## Patentansprüche

1. Bestückungssystem zur Bestückung einer Flugzeugbordküche umfassend eine in der zu bestückenden Flugzeugbordküche aufnehmbare Box (20) sowie einen Transportwagen (10) zur Bestückung der Flugzeugbordküche, mit:
- einem Basiselement (12), das eine Bodenfläche (14) sowie eine der Bodenfläche (14) gegenüberliegende Ladefläche (16) aufweist,
- einer Mehrzahl von an der Bodenfläche (14) des Basiselements (12) befestigten Rädern (18),
- einem an dem Basiselement (12) angebrachten Handgriff (22), und
- einem Sicherungsmechanismus, der dazu eingerichtet ist, die Box bei ihrem Transport auf dem Transportwagen (10) gegen Herabrutschen von dem Transportwagen (10) zu sichern, wobei der Handgriff (22) so geformt und an einer derartigen Position an dem Basiselement (12) angebracht ist, dass das Basiselement (12) des Transportwagens (10) im unbeladenen Zustand des Transportwagens (10) auf ein Basiselement (12) eines weiteren Transportwagens (10) stapelbar ist.

2. Bestückungssystem nach Anspruch 1,
**dadurch gekennzeichnet, dass** der Handgriff (22) eine erste Strebe (24), die sich von einer ersten Seitenfläche (26) des Basiselements (12) erstreckt, sowie eine zweite Strebe (28) umfasst, die sich von einer der ersten Seitenfläche (26) des Basiselements (12) gegenüberliegenden zweiten Seitenfläche (30) des Basiselements (12) erstreckt.

3. Bestückungssystem nach Anspruch 2,
**dadurch gekennzeichnet, dass** sich die erste und/oder die zweite Strebe (24, 28) des Handgriffs (22) in einem Winkel von ca. 35° bis ca. 80° relativ zur Ladefläche (16) des Basiselements (12) von den Seitenflächen (26, 30) des Basiselements (12) erstrecken und/oder bezogen auf eine Längsachse (L) des Transportwagens (10) in einem mittleren Bereich des Basiselements (12) an dem Basiselement (12) befestigt sind.

4. Bestückungssystem nach Anspruch 2 oder 3,
**dadurch gekennzeichnet, dass** der Handgriff (22) ein im Wesentlichen U-förmiges Verbindungselement (32) umfasst, das mit den freien Enden der sich von den Seitenflächen (26, 30) des Basiselements (12) erstreckenden ersten und zweiten Streben (24, 28) verbunden ist.

5. Bestückungssystem nach einem der Ansprüche 1 bis 4,
**dadurch gekennzeichnet, dass** der Handgriff (22) einstückig ausgebildet und/oder abnehmbar und/oder verschwenkbar an dem Basiselement (12) angebracht ist.

6. Bestückungssystem nach einem der Ansprüche 1 bis 5,
**dadurch gekennzeichnet, dass** das Basiselement (12) im Bereich seiner Ladefläche (16) mit einer ersten Führungseinrichtung (38) versehen ist, die dazu eingerichtet ist, mit einer komplementären zweiten Führungseinrichtung in Eingriff zu gelangen, die an der Box (20) ausgebildet ist, und die ferner dazu eingerichtet ist, die Box (20) bei ihrem Transport auf dem Transportwagen (10) gegen eine Verlagerung auf dem Transportwagen (10) in einer Richtung senkrecht zu der Längsachse (L) des Transportwagens (10) zu sichern, wenn sie sich mit der an der Box (20) ausgebildeten komplementären zweiten Führungseinrichtung in Eingriff befindet.

7. Bestückungssystem nach Anspruch 6,
**dadurch gekennzeichnet, dass** die erste Führungseinrichtung (38) und die an der Box (20) ausgebildete komplementäre zweite Führungseinrichtung eine Nut und Federverbindung bilden.

8. Bestückungssystem nach einem der Ansprüche 1 bis 7,
**dadurch gekennzeichnet, dass** die Ladefläche (16) des Basiselements (12) und/oder die erste Führungseinrichtung (38) in einer Position an dem Transportwagen (10) angeordnet ist/sind, die an eine Position einer Anordnung zur Aufnahme der zum Transport auf dem Transportwagen (10) vorgesehenen Box (20) in der Flugzeugbordküche derart angepasst ist, dass die auf dem Transportwagen (10) aufgenommene Box (20) im Wesentlichen durch eine horizontale Verlagerung von dem Transportwagen (10) in die Flugzeugbordküche geladen werden kann.

9. Bestückungssystem nach einem der Ansprüche 6 bis 8,
**dadurch gekennzeichnet, dass** die Ladefläche (16) des Basiselements (12) eine erhöhte Stufe (34) aufweist, auf deren Oberfläche die erste Führungseinrichtung (38) angeordnet ist.

10. Bestückungssystem nach einem der Ansprüche 1 bis 9,
**dadurch gekennzeichnet, dass** im Bereich der Ladefläche (16) des Basiselements (12) eine Mehrzahl von Rollen (44) angeordnet ist.

11. Bestückungssystem nach den Ansprüchen 9 und 10,
**dadurch gekennzeichnet, dass** die Rollen (44) drehbar an Seitenflächen (40, 42) der im Bereich der Ladefläche (16) des Basiselements (12) ausgebildeten Stufe (34) befestigt sind.

12. Bestückungssystem nach einem der Ansprüche 1 bis 11,
**dadurch gekennzeichnet, dass** eine Blockiereinrichtung zur Blockierung der Räder (18) eine Mehrzahl von Betätigungseinrichtungen (54) umfasst.

13. Bestückungssystem nach einem der Ansprüche 1 bis 12,
**gekennzeichnet durch** eine Positioniereinrichtung (46), die dazu eingerichtet ist, mit einer an der zu bestückenden Flugzeugbordküche vorgesehenen komplementären Positioniereinrichtung (50) zusammenzuwirken, um den Transportwagen (10) relativ zu der zu bestückenden Flugzeugbordküche zu positionieren.

14. Bestückungssystem nach Anspruch 13,
**dadurch gekennzeichnet, dass** die Positioniereinrichtung (46) des Transportwagens (10) an dem Basiselement (12) befestigt und/oder mit einer Ausnehmung (48) versehen ist, die dazu eingerichtet ist, einen Vorsprung (52) der an der zu bestückenden Flugzeugbordküche vorgesehenen komplementären Positioniereinrichtung (50) aufzunehmen, wenn der Transportwagen (10) eine gewünschte Position relativ zu der zu bestückenden Flugzeugbordküche erreicht hat.

15. Bestückungssystem nach einem der Ansprüche 1 bis 14,
**dadurch gekennzeichnet, dass** die Gesamtbreite des Transportwagens (10) geringer ist als die Breite eines Gangs eines Flugzeugs, in dem die zu bestückenden Flugzeugbordküche angeordnet ist.

## Claims

1. Equipping system for equipping an aircraft galley comprising a box (20), which is accommodatable in the aircraft galley to be equipped, as well as a transport cart (10) for equipping the aircraft galley, comprising:
- a base element (12), which has a bottom surface (14) and a loading surface (16) opposite of the bottom surface (14),
- a plurality of wheels (18) fastened to the bottom surface (14) of the base element (12),
- a handle (22) attached to the base element (12), and
- a securing mechanism adapted to prevent the box (20) from sliding off the transport cart (10) while it is being transported on the transport cart (10), the handle (22) being so shaped and attached in such a position to the base element (12) that the base element (12) of the transport cart (10), in the unloaded state of the transport cart (10), is stackable onto a base element (12) of a further transport cart (10).

2. Equipping system according to claim 1,
**characterized in that** the handle (22) comprises a first strut (24), which extends from a first lateral surface (26) of the base element (12), as well as a second strut (28), which extends from a second, lateral surface (30) of the base element (12) which is disposed opposite to the first lateral surface (26) of the base element (12).

3. Equipping system according to claim 2,
**characterized in that** the first and/or the second strut (24, 28) of the handle (22) extend from the lateral surfaces (26, 30) of the base element (12) at an angle of ca. 35° to ca. 80° relative to the loading surface (16) of the base element (12) and/or are fastened, in relation to a longitudinal axis (L) of the transport cart (10), in a central region of the base element (12) to the base element (12).

4. Equipping system according to claim 2 or 3,
**characterized in that** the handle (22) comprises a substantially U-shaped connection element (32), which is connected to the free ends of the first and second struts (24, 28) that extend from the lateral surfaces (26, 30) of the base element (12).

5. Equipping system according to any one of claims 1 to 4,
**characterized in that** the handle (22) is of an integral construction and/or is removably and/or pivotably attached to the base element (12).

6. Equipping system according to any one of claims 1 to 5,
**characterized in that** the base element (12) in the region of its loading surface (16) is provided with a first guide device (38) that is adapted to come into engagement with a complementary second guide device formed on the box (20) and that is further adapted, when it is situated in engagement with the complementary second guide device formed on the box (20), to secure the box (20), while it is being transported on the transport cart (10), against displacement on the transport cart (10) in a direction at right angles to the longitudinal axis (L) of the transport cart (10).

7. Equipping system according to claim 6,
**characterized in that** the first guide device (38) and the complementary second guide device formed on the box (20) form a tongue-and-groove joint.

8. Equipping system according to any one of claim 1 to 7,
**characterized in that** the loading surface (16) of the base element (12) and/or the first guide device (38) is/are disposed in a position on the transport cart (10) that is adapted in such a way to a position of an arrangement in the aircraft galley for receiving the box (20) provided for transport on the transport cart (10) that the box (20) accommodated on the transport cart (10) may be loaded from the transport cart (10) into the aircraft galley substantially by virtue of a horizontal displacement.

9. Equipping system according to any one of claims 6 to 8,
**characterized in that** the loading surface (16) of the base element (12) has a raised step (34), on the surface of which the first guide device (38) is disposed.

10. Equipping system according to any one of claims 1 to 9,
**characterized in that** a plurality of rollers (44) are disposed in the region of the loading surface (16) of the base element (12).

11. Equipping system according to claims 9 and 10,
**characterized in that** the rollers (44) are fastened rotatably to lateral surfaces (40, 42) of the step (34) formed in the region of the loading surface (16) of the base element (12).

12. Equipping system according to any one of claims 1 to 11,
**characterized in that** a blocking device for blocking the wheels (18) comprises a plurality of actuating devices (54).

13. Equipping system according to any one of claims 1 to 12,
**characterized by** a positioning device (46) that is adapted to interact with a complementary positioning device (50), which is provided at the aircraft galley to be equipped, in order to position the transport cart (10) relative to the aircraft galley to be equipped.

14. Equipping system according to claim 13,
**characterized in that** the positioning device (46) of the transport cart (10) is fastened to the base element (12) and/or is provided with a recess (48) that is adapted, once the transport cart (10) has reached a desired position relative to the aircraft galley to be equipped, to receive a projection (52) of the complementary positioning device (50) provided at the aircraft galley to be equipped.

15. Equipping system according to any one of claims 1 to 14,
**characterized in that** the total width of the transport cart (10) is smaller than the width of an aisle of an aircraft, in which the aircraft galley to be equipped is disposed.

## Revendications

1. Système d'équipement destiné à équiper une cuisine de bord d'aéronef, comportant un contenant (20) pouvant être logé dans la cuisine de bord d'aéronef à équiper, ainsi qu'un chariot de transport (10) destiné à équiper la cuisine de bord d'aéronef, lequel chariot comporte :
- un élément de base (12) qui présente une surface de fond (14), ainsi qu'une surface de chargement (16) opposée à ladite surface de fond (14),
- une pluralité de roues (18) fixées sur la surface de fond (14) de l'élément de base (12),
- une poignée (22) placée sur ledit élément de base (12), et
- un mécanisme de sécurité qui est conçu pour sécuriser le contenant (20) et éviter qu'il ne glisse du chariot de transport (10) pendant son transport, la poignée (22) étant formée et positionnée sur l'élément de base (12) à un endroit tel que l'élément de base (12) du chariot de transport (10) peut, lorsque ce dernier n'est pas chargé, être empilé sur l'élément de base (12) d'un autre chariot de transport (10).

2. Système d'équipement selon la revendication 1,
**caractérisé en ce que** ladite poignée (22) présente une première barre (24) qui s'étend depuis une première face latérale (26) de l'élément de base (12), ainsi qu'une deuxième barre (28) qui s'étend depuis une deuxième face latérale (30) de l'élément de base (12) opposée à la première face latérale (26) de l'élément de base.

3. Système d'équipement selon la revendication 2,
**caractérisé en ce que** la première et/ou la deuxième barre (24, 28) de la poignée (22) s'étendent depuis les faces latérales (26, 30) de l'élément de base (12) selon un angle compris entre environ 35° et environ 80° par rapport à la surface de chargement (16) de l'élément de base (12) et/ou sont, considérées par rapport à un axe longitudinal (L) du chariot de transport (10), fixées sur l'élément de base (12), dans une zone médiane de ce dernier.

4. Système d'équipement selon la revendication 2 ou 3,
**caractérisé en ce que** la poignée (22) comporte un élément de liaison (32) sensiblement en forme de U, lequel est relié aux extrémités libres des première et deuxième barres (24, 28) s'étendant depuis les faces latérales (26, 30) de l'élément de base (12).

5. Système d'équipement selon l'une des revendications 1 à 4,
**caractérisé en ce que** la poignée (22) est réalisée d'un seul tenant et/ou montée amovible et/ou de façon à pouvoir basculer sur l'élément de base (12).

6. Système d'équipement selon l'une des revendications 1 à 5,
**caractérisé en ce que** l'élément de base (12) est pourvu dans la zone de sa surface de chargement (16) d'un premier dispositif de guidage (38) qui est conçu pour venir en prise avec un deuxième dispositif de guidage complémentaire formé sur le contenant (20), et qui est en outre conçu pour sécuriser le contenant (20) pendant son transport sur le chariot de transport (10) pour éviter son déplacement sur le chariot de transport (10) dans un sens perpendiculaire à l'axe longitudinal (L) du chariot de transport (10), lorsque le premier dispositif de guidage se trouve en prise avec le deuxième dispositif de guidage complémentaire formé sur le contenant (20).

7. Groupe de climatisation selon la revendication 6,
**caractérisé en ce que** le premier dispositif de guidage (38) et le deuxième dispositif de guidage complémentaire réalisé sur le contenant (20) forment un assemblage par rainure et languette.

8. Système d'équipement selon l'une des revendications 1 à 7,
**caractérisé en ce que** la surface de chargement (16) de l'élément de base (12) et/ou le premier dispositif de guidage (38) est/sont disposé(s) sur le chariot de transport (10) dans une position qui est adaptée à la position d'un agencement destiné dans la cuisine de bord d'aéronef à recevoir le contenant (20) à transporter à l'aide du chariot de transport (10) de sorte que le contenant (20) placé sur le chariot de transport (10) peut être transféré sensiblement par déplacement horizontal du chariot de transport (10) à la cuisine de bord d'aéronef.

9. Système d'équipement selon l'une des revendications 6 à 8,
**caractérisé en ce que** la surface de chargement (16) de l'élément de base (12) présente un décrochement formant une marche (34) sur la surface supérieure de laquelle est disposé le premier dispositif de guidage (38).

10. Système d'équipement selon l'une des revendications 1 à 9,
**caractérisé en ce qu'**une pluralité de roulettes (44) est disposée dans la zone de la surface de chargement (16) de l'élément de base (12).

11. Système d'équipement selon les revendications 9 et 10,
**caractérisé en ce que** les roulettes (44) sont fixées mobiles en rotation sur les faces latérales (40, 42) de la marche (34) formée dans la zone de la surface de chargement (16) de l'élément de base (12).

12. Système d'équipement selon l'une des revendications 1 à 11,
**caractérisé en ce qu'**un dispositif de blocage servant à bloquer les roues (18) comporte une pluralité de dispositifs d'actionnement (54).

13. Système d'équipement selon l'une des revendications 1 à 12,
**caractérisé par** un dispositif de positionnement (46) qui est conçu pour coopérer avec un dispositif de positionnement complémentaire (50) prévu dans la cuisine de bord d'aéronef à équiper pour positionner le chariot de transport (10) par rapport à la cuisine de bord d'aéronef à équiper.

14. Système d'équipement selon la revendication 13,
**caractérisé en ce que** le dispositif de positionnement (46) du chariot de transport (10) est fixé sur l'élément de base (12) et/ou pourvu d'un évidement (48) qui est conçu pour recevoir une saillie (52) du dispositif de positionnement (50) complémentaire prévu dans la cuisine de bord d'aéronef à équiper lorsque le chariot de transport (10) a atteint une position souhaitée par rapport à la cuisine de bord d'aéronef à équiper.

15. Système d'équipement selon l'une des revendications 1 à 14,
**caractérisé en ce que** la largeur totale du chariot de transport (10) est inférieure à la largeur d'une allée d'un aéronef dans lequel est disposée la cuisine de bord d'aéronef à équiper.
